# EUROPEAN PATENT APPLICATION

(11) **EP 1 316 356 A2**
(43) Date of publication of application: **04.06.2003**
(21) Application number: 02025147.6
(22) Date of filing: 09.11.2002
(51) Int. Cl.: B01D 71/26, C08L 23/16, B32B 27/32

(54) **Diffusion membrane**

(30) Priority: 03.12.2001 US 5846
(71) Applicant: Celgard Inc., Charlotte, South Carolina 28273 (US)
(72) Inventor: Nguyen, Khuy V., Charlotte, North Carolina 28217 (US); Simmons, Donald K., Charlotte, North Carolina 28204 (US); Call, Ronald W., Rock Hill, South Carolina 29732 (US); Hux, Shawn E., Gastonia, North Carolina 28056 (US)
(74) Representative: von Kreisler, Alek, Dipl.-Chem.

(57) **Abstract**

A diffusion membrane is a microporous sheet comprising a blend of an aliphatic polyolefin and a thermoplastic olefin (TPO) elastomer. The blend comprises less than 10 percent by weight of the elastomer. The preferred polyolefins are selected from a group consisting of polyethylene, polypropylene, copolymers thereof, and blends thereof. The preferred TPO elastomers are selected from the group consisting of ethylene-propylene rubbers (EPR), ethylene-propylene-diene terpolymer rubbers (EPDM), and combinations thereof.

## Description

### Field of the Invention

A diffusion membrane is made from a blend of an aliphatic polyolefin and a thermoplastic olefin elastomer.

### Background of the Invention

A membrane is a structure that acts as a boundary between two distinct phases and resists the movement of molecules between those two phases to a greater or lesser extent. This movement is also referred to as diffusion. Membranes may be solid, i.e., non-porous, or semipermeable, i.e., microporous. The microporous structures act as diffusion barriers, as well a highly efficient filters in the range of molecular dimensions, allowing passage of ions, water, and other solvents in very small molecules, but being almost impermeable to macromolecules, such as proteins, and colloidal particles. These membranes have been used in industrial operations, such as waste liquor recovery, desalinization, electrolysis, osmosis, and dialysis and in commercial applications, such as flow regulators in lighters, membranes in oxygenators, separators in charge storage devices (e.g., batteries and fuel cells).

One such membrane is referred to as a "Celgard"® membrane. The Celgard membrane has unique physical properties and is made by a unique dry stretch process in which a semi-crystalline polymer is extruded, annealed, and then stretched to form a microporous membrane. See: Kesting, R.E., *Synthetic Polymeric Membranes,* 2^{nd} Edition, John Wiley & Sons, Inc., New York, NY, 1985, pp. 290-297, and Bierenbaum, H. S. *et al.,* "Microporous Polymeric Films," *Ind. Eng. Chem., Prod. Res. Develop.,* Vol. 13, No. 1, 1974, pp.2-9, both are incorporated herein by reference. Such membranes have been formed into hollow fibers and flat sheets. These membranes have been useful as membranes in blood oxygenators and lighters, and as separators in batteries.

While these membranes have met with great commercial success, there is a desire, not only to enhance their performance in existing applications, but also to diversify their use to additional applications that could require greater mechanical strength while maintaining the unique microporous structure of these membranes. Accordingly, there is a need to increase the mechanical strength of such microporous membranes without sacrificing the microporous structure of these membranes.

These membranes are typically made of polyolefins, such as polypropylene and polyethylene. It is known in the film art that mechanical strength of: non-porous polypropylene films may be increased by the addition of polyisobutylene rubber and fillers, see U.S. Patent 4,911,985; non-porous packaging films may be improved by the addition of an elastomer, see U.S. Patent 5,071,686; and non-porous high density polyethylene films may be improved by addition of elastomers, see U.S. Patent 5,635,262. None of these prior art references, however, teach or suggest how one may improve the properties of a microporous membrane while maintaining the porosity of the membrane. European Publication No. 1,153,967 discloses a microporous membrane made of a resin composition comprising an alicyclic compound and a resin selected from the group consisting of polyolefins, thermoplastic elastomers, and graft polymers.

Accordingly, there is a need in the art for a method of improving the mechanical strength of a microporous membrane while maintaining the porosity of the membrane.

### Summary of the Invention

A diffusion membrane is a microporous sheet comprising a blend of an aliphatic polyolefin and a thermoplastic olefin (TPO) elastomer. The blend comprises less than 10 percent by weight of the elastomer. The preferred polyolefins are selected from a group consisting of polyethylene, polypropylene, copolymers thereof, and blends thereof. The preferred TPO elastomers are selected from the group consisting of ethylene-propylene rubbers (EPR), ethylene-propylene-diene terpolymers rubbers (EPDM), and combinations thereof.

### Detailed Description of the Invention

The membrane disclosed herein is a microporous membrane. See Kesting, *Ibid*., incorporated herein by reference. The membrane has a thickness less than 2 mils (50 microns), preferably less than 1 mil (25 microns), and most preferably, in the range of 0.35 to 0.9 mils (8 to 23 microns) in thickness. The membrane will have a machine direction (MD) tensile strength (TS, ASTM D638) greater than 1,500 kg/cm² and a puncture strength (PS, test method described below) greater than 400 g/mil. The microporous membrane will have a Gurley (ASTM-D726B) of less than 35 seconds/10 cc, preferably less than 25 secs/10cc. These membranes may be used as, among other things, battery separators. These membranes may be made by a phase inversion method or a dry stretch method (Kesting, *Ibid.,* pages 237-297, and Bierenbaum, *Ibid.,* both are incorporated herein by reference), but the latter method is preferred.

The microporous membrane will consist of a blend of an aliphatic polyolefin and a thermoplastic olefin (TPO) elastomer. The blend will consist of less than 10 percent by blend weight of the elastomer; preferably in the range of 2 to 10 percent by blend weight of the elastomer; and most preferred, 3 to 7 percent by blend weight of the elastomer.

An aliphatic polyolefin, as used herein, is directed to a class or group name for thermoplastic polymers derived from single olefins, and that are characterized by straight- or branched- chain arrangement of the constituent carbon atoms. The important ones include polyethylenes, polypropylenes, polybutenes, polyisoprenes, polymethylpentenes, and their copolymers. Preferably, they are selected from the group consisting of polyethylene, polypropylene, copolymers thereof, and blends thereof. Polyethylene refers preferably to a high-density polyethylene having a density (ASTM D792) ranging from 0.95 to 0.96 g/cm², and a melt flow index (MFI, ASTM D1238, 190°C per 2.16 kilograms) ranging from 0.38 to 0.42 dg/minutes. Polypropylene refers preferably to an isotactic homopolymer with a density (ASTM D1505) of about 0.905 and a MFI (ASTM 1238, 230°C/2.16 kilograms) of 1.5.

A TPO elastomer is a copolymer or terpolymer based on polyolefin monomers. For example, ethylene-propylene rubber (EPR) is a copolymer and ethylene-propylene-diene (EPDM) rubber refers to a terpolymer. Preferably, the EPR has a Mooney viscosity (ASTM D1646) of about 51 with an ethylene monomer content (ASTM D3900) of about 61 percent by weight and a narrow molecular weight distribution. Preferably, the EPDM has a Mooney viscosity in the range of 45 to 52, an ethylene content of 69 to 70 percent by weight, and a diene content of 0.5 to 3.4 percent by weight, and the molecular weight distribution may be either broad or narrow.

The instant invention will be more fully appreciated with reference to the following examples.

### Examples

Examples 1, 3, 5, and 7 are non-porous, precursor (i.e., before stretching to induce porosity) films. Examples 2, 4, 6, and 8 are microporous membranes. All materials were blended by conventional melt blending techniques. Examples 1 and 2 are a blend of polyethylene (HDPE, density - 0.959, MFI - 0.42, medium molecular weight, narrow molecular weight distribution) and an EPDM rubber (Mooney viscosity - 45, percent ethylene - 69, percent diene - 0.5, narrow molecular weight distribution). Examples 3 and 4 are a blend of a polypropylene (isotactic homopolymer, density - 0.905, MFI - 1.5) and an EPDM rubber (same as in Examples 1 and 2). Examples 5 and 6 are a blend of a polypropylene (same as in Examples 3 and 4) and an EPR rubber (Mooney viscosity - 51, percent ethylene - 61, narrow molecular weight distribution). Examples 7 and 8 are a blend of a polyethylene (HDPE, density - 0.961, MFI - 0.38) and an EPDM rubber (Mooney viscosity - 52, percent ethylene - 70, percent diene - 3.4, broad molecular weight distribution). The membranes were made in a conventional manner by a dry stretch process in which the blend is extruded, annealed, and then stretched to form the microporous membrane.

### Test Methods

All the test methods are conventional. Gurley (sec/10cc or sec) was measured according to ASTM-D726(B). Puncture strength (PS) was measured as follows: Ten measurements are made across the width of stretched product and averaged. A MiTech Stevens LFRA Texture Analyzer is used. The needle is 1.65 mm in diameter with a 0.5 mm radius. The rate of descent is 2 mm/sec and the amount of deflection is 6 mm. The film is held tight in the clamping device with a central hole of 11.3 mm. The displacement (in mm) of the film that was pierced by the needle was recorded against the resistance force (in gram force) developed by the film. The penetration energy (puncture strength) was defined as the product of the resistance force and the displacement at the maximum point. Tensile strength (TS), in the machine direction, was measured according to ASTM D638 using a 2-inch X 0.5-inch sample, 5 measurements were averaged and the average was reported.

**TABLE 1**

| **EXAMPLE** | **Blend** **% Elastomer** | **Thickness** **mil** | **Tensile** **(TS)** **kg/cm**^{**2**} | **Puncture** **(PS)** **g/mil** | **Gurley** **sec/10cc** |
|---|---|---|---|---|---|
| 1 | 0 | 0.56 | 928 | 293 | NA |
| | 5 | 0.61 | 1184 | 329 | NA |
| | 10 | 0.45 | 1250 | 378 | NA |
| 2 | 0 | 0.44 | 1173 | 373 | 22 |
| | 5 | 0.48 | 1837 | 468 | 23 |
| | 10 | 0.40 | 1828 | 510 | 29 |
| 3 | 0 | 0.84 | 972 | 275 | NA |
| | 5 | 0.84 | 1049 | 310 | NA |
| | 10 | 0.60 | 1120 | 352 | NA |
| 4 | 0 | 0.75 | 1446 | 353 | 19 |
| | 5 | 0.69 | 1580 | 426 | 22 |
| | 10 | 0.49 | 1669 | 494 | 123 |
| 5 | 0 | 0.83 | 1040 | 311 | NA |
| | 5 | 0.70 | 1137 | 350 | NA |
| | 10 | 0.59 | 1420 | 408 | NA |
| 6 | 0 | 0.75 | - - | 386 | 26 |
| | 5 | 0.65 | - - | 482 | 20 |
| | 10 | 0.59 | - - | 462 | 68 |
| 7 | 0 | 0.88 | - - | 199 | NA |
| | 5 | 0.86 | - - | 263 | NA |
| | 10 | 0.88 | - - | 299 | NA |
| 8 | 0 | 0.74 | - - | 288 | 25 |
| | 5 | 0.70 | - - | 327 | 32 |
| | 10 | 0.70 | - - | 355 | 88 |

The present invention made be embodied in other forms without departing from the spirit and the central attributes thereof and, accordingly, reference should be made to the appended claims, rather than to the foregoing specification, as indicated the scope of the invention.

## Claims

1. A method of improving a membrane comprising the step of:
providing a microporous sheet comprising a blend of an aliphatic polyolefin and less than 10 percent by blend weight of a thermoplastic olefin elastomer selected from the group of ethylene-propylene rubbers, ethylene-propylene-diene terpolymer rubbers, and combinations thereof.

2. The method of Claim 1 wherein the elastomer comprises about 2 to 10 percent by blend weight.

3. The method of Claim 2 wherein the elastomer comprises about 3 to 7 percent by blend weight.

4. The method of Claim 1 wherein the microporous sheet has a Gurley less than 35 seconds.

5. The method of Claim 4 wherein the microporous sheet has a Gurley less than 25 seconds.

6. The method of Claim 1 wherein the polyolefins selected from polyethylene, polypropylene, copolymers thereof, and blends thereof.

7. The method of Claim 1 wherein the thermoplastic olefin elastomer is selected from the group of ethylene-propylene rubbers, ethylene-propylene-diene terpolymer rubber, and combinations thereof.

8. A method of improving a membrane comprising the step of:
providing a microporous sheet having a Gurley less than 35 seconds comprising a blend of an aliphatic polyolefin selected from the group consisting of polyethylene, polypropylene, copolymers thereof, and blends thereof, and a thermoplastic olefin elastomer being selected from the group consisting of ethylene-propylene rubbers, ethylene-propylene-diene terpolymer rubbers, and combinations thereof, and the elastomer comprising 3 to 7 percent by blend weight.

9. A diffusion membrane comprising:
a microporous sheet comprising a blend of an aliphatic polyolefin and a thermoplastic olefin elastomer, the blend comprising less than 10 percent by blend weight of the elastomer, the polyolefin being selected from the group consisting of polyethylene, polypropylene, copolymers thereof, and blends thereof, the thermoplastic olefin elastomer being selected from the group consisting of ethylene-propylene rubbers, ethylene-propylene-diene terpolymer rubbers, and combinations thereof.

10. The membrane of Claim 9 wherein the blend comprises between 2 and 10 percent by blend weight.

11. The membrane of Claim 10 wherein the blend comprises between 3 and 7 percent by blend weight.
